# EUROPEAN PATENT APPLICATION

(11) **EP 3 792 210 A1**
(43) Date of publication of application: **17.03.2021**
(21) Application number: 19197305.6
(22) Date of filing: 13.09.2019
(51) Int. Cl.: B66B 9/02, B66B 11/04, H02K 41/02, B66B 9/00

(54) **PASSENGER CONVEYOR WITH A LINEAR MOTOR**

(71) Applicant: KONE Corporation, 00330 Helsinki (FI)
(72) Inventor: RAASSINA, Pasi, 00330 Helsinki (FI); MAJASALMI, Teemu, 00330 Helsinki (FI); AHONEN, Pasi, 00330 Helsinki (FI)
(74) Representative: Glück Kritzenberger Patentanwälte PartGmbB

(57) **Abstract**

The invention relates to a passenger/goods conveyor (10) comprising at least one transport entity connected with at least one mover (22, 24), which co-acts together with at least one stator beam (26a,b, 28a,b) defining a movement trajectory for the transport entity, the at least one mover (22, 24) and the stator beam (26a,b, 28a,b) forming a linear motor, the stator beam (26a,b, 28a,b) carrying on at least two opposite sides stator faces (50) with stator poles (52) which again co-act with corresponding mover counter faces (54) comprising mover units (58) facing the stator poles (52), the mover units (58) are arranged successively in running direction of the mover (22, 24), whereby between the two stator faces (50) and the corresponding mover counter faces (54) air gaps (ag) are formed, whereby each mover unit (58) comprises electro-magnetic components (60-68) configured to co-act with the stator poles (52) to provide a propulsion force to accelerate and move the mover (22, 24) along the stator beam (26a,b, 28a,b) as well as an attraction force between the stator faces (50) and counter faces (54) to adjust both air gaps (ag). According to the invention in connection with at least one of the counter faces (54) of the mover (22, 24) at least one magnetic sensor (88a, 88b) is positioned facing the stator poles (52). Thus, the torque angle can always be calculated even after replacement of sensor or drive components.

## Description

The present invention relates to a passenger/goods conveyor, e.g. an elevator, comprising at least one transport entity, e.g. an elevator car, connected with at least one mover, which co-acts together with at least one stator beam defining a movement trajectory for the transport entity. The at least one mover and the stator beam form a linear motor. The stator beam carries on at least two opposite sides stator faces which are formed by stator poles which regularly are worked out from iron stator rails embedded in the stator beam. The stator poles co-act with mover units arranged successively in running direction of the mover which at their sides facing the stator poles form the mover counter faces of the movers. Between the two stator faces and the corresponding two mover counter faces air gaps are formed. Each mover unit comprises electro-magnetic components configured to co-act with the stator poles to provide a propulsion force to accelerate and move the mover along the stator beam as well as an attraction force between the faces and counter faces to adjust both air gaps.

Such a passenger/goods conveyor can for example be an elevator having at least one, particularly several, elevator cars, whereby each elevator car is suspended and driven by at least one, particularly at least two of the above mentioned linear electric motors, whereby at least one mover, particularly at least two movers are connected to the at least one elevator car and co-acting on the stator beam. The linear stator beams of an elevator comprise at least one vertical linear stator beam extending in a vertical movement trajectory of the elevator car and at least one horizontal linear stator beam extending in a horizontal movement trajectory of the elevator car. This type of elevators having a linear electric motor is particularly configured for high-rise elevators where on one hand the weight of the elevator ropes becomes too large and on the other hand the presence of only one elevator car in an extremely long elevator shaft of several hundred meters would reduce the economic use of this elevator shaft which of course uses valuable building room in the skyscraper.

Such a passenger conveyor of the abovementioned type can also be an escalator or moving sidewalk or ramp, where the mover(s) carry pallets of an endless conveyor structure as transport entities. Independent of the type of passenger conveyor, the common feature thereof are stator beams which extend horizontally as also extend in a direction which deviates from the horizontal plane, i.e. are inclined or vertical. As the movers of the linear motors carry the gravitational force acting on the mover, e.g. an elevator car or an escalator pallet plus load, the impact of this weight or gravitational force is different depending on the orientation of the corresponding stator beam. In a horizontal stator beam this force acts normal to the stator beam, in a vertical beam it acts parallel thereto and in an inclined stator beam the force impact can be divided in a force vector parallel to the stator beam and a force vector normal to the stator beam. The value of these vectors depend on the angle between the horizontal and inclined stator beam. The linear motor in this case particularly controls the air gaps between the movers and stator beams.

For a good control of the propulsion force as well the air gap control (q-a and d-axis), particularly under use of a vector control method, it is essential to obtain information about the torque angle, i.e. about the exact mutual position of the electro-magnetic components of the stator beam and mover. In today's linear motors, the right torque angle is found by doing a commissioning. The commissioning result is stored into the memory. Anyhow, sometimes the torque angle information is lost or failing for some reason, for example if a drive or encoder is changed. As a result a lost torque angle may lead to a very unpleasant jerks of the mover.

It is object of the invention to provide a passenger/ goods conveyor which ensures a smooth operation even in case where essential components of the motor drive or sensors are changed. The object of the invention is solved with a passenger/ goods conveyor according to claim 1. Preferred embodiments of the invention are subject matter of the dependent claims. Preferred embodiments are also described in the description and in the drawings.

According to the invention the passenger/goods conveyor comprises at least one transport entity connected with at least one mover, which co-acts together with at least one stator beam defining a movement trajectory for the transport entity. The at least one mover and the stator beam form a linear motor, whereby the stator beam carries on at least two opposite sides stator faces formed by stator poles which may e.g. be worked from a separate stator rail embedded in the stator beam or by the stator beam itself. The stator faces again co-act with corresponding mover counter faces formed by mover units facing the stator poles. The mover units are arranged successively in running direction of the mover, whereby between the two stator faces and the corresponding two mover counter faces air gaps are formed. Each mover unit comprises electro-magnetic components configured to co-act with the stator poles to provide a propulsion force to accelerate and move the mover along the stator beam as well as an attraction force between the faces and counter faces to adjust both air gaps.

Usually a mover is formed by a succession of the same mover units having for example, one or two windings, probably a permanent magnet and/or irons. The length of the mover is defined by the number of successive mover units, whereby the propulsion force of the mover increases about linearly with the number of mover units.

According to the invention this base elevator type is characterized in that in connection with at least one of the counter faces at least one magnetic sensor is positioned facing the stator poles.

Via the signals of the magnetic sensor a drive control of the linear motor is at any time able to obtain the torque angle of the linear motor in real time, as on one hand the position of the sensor with respect to the electro-magnetic mover components, i.e. the components of its mover units is known and on the other hand the sensor is able to detect the position of the stator poles, e.g. stator teeth of the stator beams. Thus, this magnetic sensor guarantees that the torque angle of the linear motor can be calculated by the drive control from the sensor signals in all operating circumstances of the linear motor.

If the poles in the different stator faces are worked exactly in their mutual position one single magnetic sensor is sufficient to obtain the position of the stator poles of all stator faces. If this is not the case, at least one sensor should be provided per counter face. Via this measure it is ensured that the position of the stator poles of each stator face is measured with a separate sensor. The drive control thus obtains the exact pole position and torque angle of each stator face, even if the mutual pole position between the different stator faces is not the same and/or not known.

In a preferred embodiment of the invention the magnetic sensor is a Hall effect sensor configured to generate a signal corresponding to its vicinity to the stator poles as to obtain a precise mutual position of stator poles and mover components.

Preferably, at least two sensors are provided per counter face to obtain a redundant position signal. This has the advantage that if one of the both sensors fail, the other still works. In this case preferably there are procedures to determine which of the two sensors issues failure signals, e.g. by comparing the sensor signals with the signal of the sensors of other counter faces.

Preferably the two sensors are mutually offset in moving direction of the mover, preferably by 90 degrees. Thus, one sensor signal represents substantially a sine-wave and the other 90° offset sensor signal represents the cos-wave when the mover of the linear motor moves, which optimizes the use of the signals in connection with a vector control, whereby preferably a direct-quadrature-zero transformation is calculated based on the stator position of the mover and used for the drive control.

It is not necessary that that the sensor is located in (integrated in) the counter face of the mover. Is can also be located above or below, e.g. on an upper or lower collar, which is preferably detachably connected to the mover housing. Via this measure the sensors integrated in the collar form a sensor unit which can easily be replaced. It is only essential that the sensor is mounted in a fixed position with respect to the electro-magnetic components of the mover in the counter face.

According to a preferred embodiment of the invention, the magnetic sensors are Hall effect sensors which are reliable to determine the position of the stator poles which are usually iron stator teeth worked from an iron stator rail.

Preferably, the mover comprises two mover blocks, whereby each of the mover blocks comprises the electro-magnetic components of the mover units of two adjacent mover counter faces. The mover blocks can preferably be mounted in a common mover housing. The provision of mover blocks with the mover units for two counter faces essentially facilitates the mounting of the whole mover system. Thus, for building a mover with four counter faces only two mover blocks are necessary which are mounted in a mover housing or mover support side by side as to be able to embrace a stator beam with a square cross section having four stator faces along its four side faces.

According to a preferred embodiment of the invention the mover blocks are facing each other and sandwiching the stator beam in between, and which mover blocks are aligned with the running direction.

Preferably, the magnetic sensors are located on at least one end of the mover blocks. This enables a fast attachment and detachment on/from the mover blocks if the sensors or the mover units need maintenance. The different functional groups are thus positioned separately which facilitates maintenance in general.

Preferably, the electro-magnetic components comprise mover windings and optionally permanent magnets. This allows the operation of the linear motor alone by driving the movers, whereas the stator beam only comprises (passive) stator poles, preferably iron stator teeth or even permanent magnets. Thus the electro-magnetic components (teeth) of the stator beams are only passive elements which facilitates the drive control of the linear motor.

According to a preferred embodiment of the invention the mover comprises inductive sensors, as e.g. eddy current sensors. With these sensors the control of the air gap can be realized.

Further, if already the magnetic sensors are located in a sensor unit, it would be preferable also to position the inductive sensor(s) in the sensor unit. This has the advantage that all sensor components of the linear motor are integrated in one unit and can easily be replaced or maintained, if necessary.

Preferably, in this connection the stator beam comprises an electrically conductive stripe, preferably made of aluminium or copper, extending in running direction, which allows the inductive sensor to calculate the size of the air gap.

Preferably, the conveyor comprises a drive control with a drive model in which a sine-cosine algorithm is used to calculate the position of the mover. This works hand in hand with a 90 degree offset arrangement of two sensors per counter face. This facilitates the control of the mover movement via the drive control.

Preferably, the magnetic sensors are configured to generate a sinusoidal signals, wherein the peak value of a sinusoidal signal is generated when a magnetic sensor is above a stator pole or tooth of a stator rail and the lowest value of the sinusoidal signal is generated when a magnetic sensor is above an air gap between two adjacent stator teeth. A wavelength of the sinusoidal signal corresponds to a distance between two adjacent stator teeth, i.e. a stator pole pitch d. Therefore, the values between the lowest and peak value of the sinusoidal signal are generated when a magnetic sensor is moved in moving direction of the mover along the stator rail from the position where a magnetic sensor is above an air gap between two adjacent stator teeth to the position where a magnetic sensor is above a stator tooth. When a mover travels along a vertical stator beam or a horizontal stator beam, a sensor unit of the mover moves along a stator rail above stator teeth. The sensor unit and particularly the magnetic sensors of that sensor unit move in relation to the stator teeth in moving direction of the mover generating signals and in case the velocity of the mover is constant the signals are substantially sine waves.

In a preferred embodiment magnetic sensors, preferably Hall effect sensors, within one sensor unit have 90 electrical degree offset. Then, sinusoidal signals generated by these magnetic sensors then generate sinusoidal signals having 90 degree offset i.e. 90 degree phase shift. In this embodiment, one signal may represent a sine wave and the other a cosine wave. As the sinusoidal signal corresponds to a position between adjacent stator teeth, the location of the sensor unit may be defined based on a known value on a sine wave and a known value on a cosine wave of magnetic sensors in a sensor unit. Preferably, the position of a sensor unit may be defined based on the measurement values of magnetic sensors of the sensor unit by using a sine-cosine algorithm.

According to a preferred embodiment of the invention the linear motor is a flux-switching permanent magnet linear motor, which allows a very exact control of the linear motor and which is very economical.

Preferably, the conveyor is an elevator, and the transport entity is an elevator car. The conveyor may also be an escalator or moving ramp or moving sidewalk, in which case the transport entity is a pallet or a pallet band.

Preferably, the magnetic sensors are located in a sensor unit comprising at least two pairs of magnetic sensors, each pair having the offset and each pair facing the stator poles of a stator face, preferably each pair is facing the stator poles of a different stator face. This arrangement allows an independent and redundant torque angle detection for each counter face.

According to a preferred embodiment of the invention the sensor unit has an interface with I/O which is shared by the at least two magnetic sensor pairs.

Preferably, the sensor unit comprises a processing unit configured to process data of the magnetic sensors before the data is outputted to the conveyor control system. Of course, the data of the inductive sensor(s) may also be processed with the same processing unit before they are passed to the conveyor control.

Preferably, the magnetic sensors or sensor unit is connected to conveyor control system via the interface which facilitates the connection and disconnection as well as the I/O configuration of the data generating/processing components. If inductive sensors are provided for the air gap control also these should share the interface with the magnetic sensors, which saves components.

According to a preferred embodiment of the invention adjacent magnetic sensor pairs are located perpendicular to each other each facing the stator poles of the stator faces.

Preferably, the mover has at least one sensor unit at each end in running direction. This has the advantage that the sensor unit can easily be detached and changed/maintained separately from the mover blocks.

Preferably the stator poles are provided in a stator rail, particularly made of iron, which stator rail is embedded in a side face of the stator beam. The stator beam can thus be made from a material which is optimized for its support function, e.g. fibre-reinforced polymers or metals and the stator poles can be made from a material which is optimized for its motor function, e,g, iron or permanent magnets. Thus the stator poles as part of the stator rails as well as the stator beams can be optimized for their different functions.

Following expressions are used as synonym: movement trajectory - movement path - elevator shaft (if vertical trajectory); conveyor control - conveyor control system; stator pole - stator tooth;

The invention is now described in greater detail in connection with the enclosed drawings. In these show:
- Fig. 1: a side view of an elevator with two elevator shafts having vertical and horizontal stator beams acting together with movers pivoted at several elevator cars moving in those shafts,
- Fig. 2: a horizontal cross-section in the corner area between the elevator shaft and the elevator car showing a rotatable stator beam part co-acting with a rotatably pivoted mover of the elevator car,
- Fig. 3: a vertical stator beam co-acting with a mover of the elevator car,
- Fig. 4: a vertical schematic drawing indicating a linear FSPM mover co-acting with a stator rail having downwards inclined stator teeth,
- Fig. 5: a perspective view of a mover comprising a mover housing with two mover blocks and two sensor units at the upper end thereof,
- Fig. 6: a perspective view of a sensor unit of Fig. 5,
- Fig. 7: a side view on the sensor unit in direction X of Fig. 6, and
- Fig. 8: a perspective front view of the sensor unit of Fig. 5.

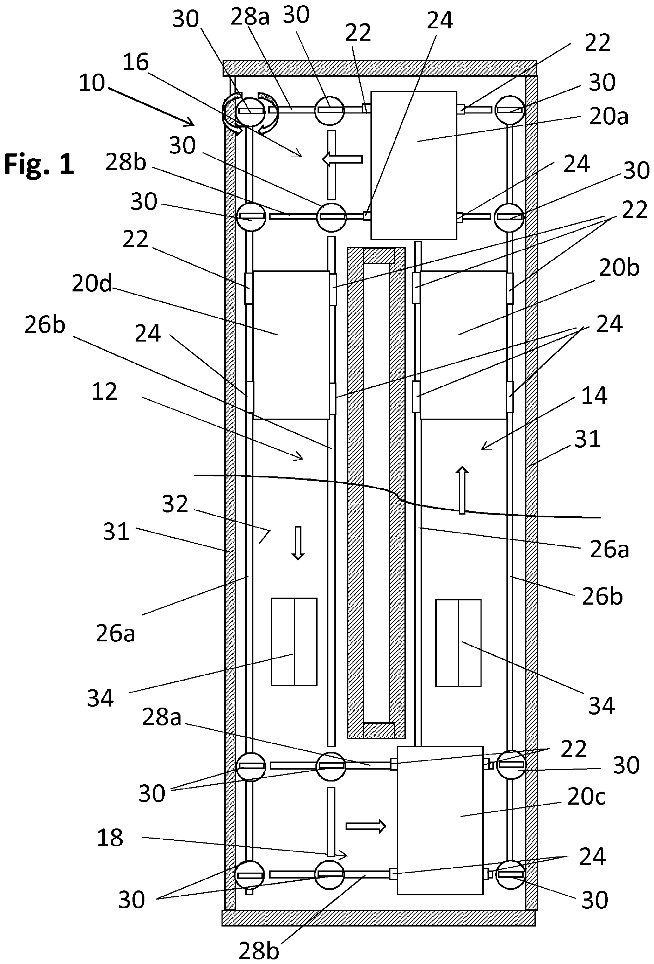

Fig. 1 shows an elevator 10 as an example of a passenger conveyor, having two vertical elevator shafts 12, 14 are at least at their upper and lower ends connected by horizontal shaft parts 16, 18 in which elevator cars 20a-20d are movable via linear motors. The linear motors are formed by upper movers 22 and lower movers 24 which are rotatably mounted, i.e. pivoted to the back side of the elevator cars, co-acting together with vertical stator beams 26a,b, horizontal stator beams 28a,b and with rotatable stator beams parts 30 which are rotatably mounted to a common back wall 32 of the vertical and horizontal shafts 12, 14, 16, 18. The vertical elevator shafts 12, 14 are usually located between shaft walls 31 of a building.

Via this arrangement of vertical stator beams 26a,b and horizontal stator beams 28a,b and the rotatable stator beam parts 30 located in between them, the elevator cars 20a-20d are able to move via their movers 22, 24 in the two elevator shafts 12, 14 and two horizontal elevator shaft parts 16, 18 in a movement trajectory as indicated by the arrows. The advantage of such a solution is that no counterweights and no hoisting ropes are necessary which makes this basic concept very useful for high buildings as skyscrapers wherein the vertical length of the elevator shaft is more or less unlimited. A height limiting factor for conventional traction sheave elevators was the weight of the elevator ropes, which sum up in high shafts to a weight of tons. This restriction is not present in this linear motor based elevator concept.

With the reference number 34, landing doors are indicated which are preferably located in the common sidewall facing the viewer, i.e. opposite to the common back wall 32 where the stator beams 26a,b, 28a,b are mounted. But of course the landing doors could also be on the same back wall 32 or where the stator beams are mounted.

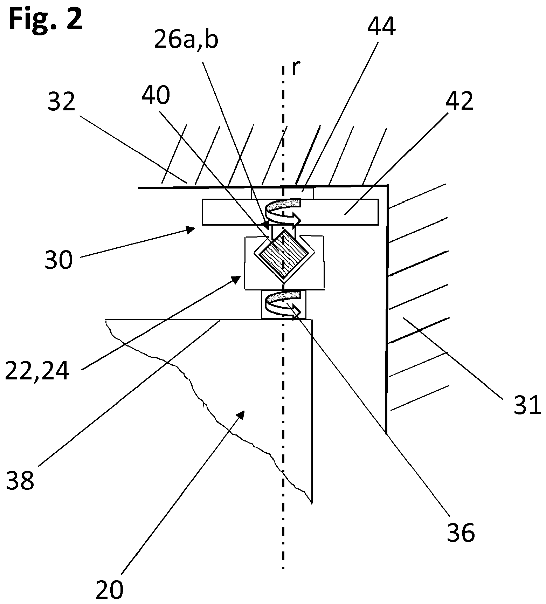

Fig. 2 shows the co-action of the rotatable stator parts 30 and the movers 22, 24 which are via a pivoted joint 36 rotatably mounted to a wall, particularly back wall or support structure 38 of the elevator car 20. The rotatable stator part 30 and the mover 22,24 are rotatable around a common rotation axis r. The rotatable beam part 30 comprises a beam section 40 which abuts in the vertical direction (as indicated) with the vertical stator beams 26a, 26b. The stator sections 40 are mounted to a rotating disc 42, which is optional, and a bearing 44 to the back wall 32 of the elevator shaft whereby preferably either the rotating disk 42 or the mover 22, 24 is driven with a rotation drive around the common rotation axis r. Thus, the whole arrangement of rotatable stator part and mover can be rotated with only one rotating drive. During the rotation, the linear motor is switched off so that the mover 22, 24 and the stator section 40 are via the magnetic force between the stator section and the mover 22, 24 fixedly attached to each other which keeps the car from moving during change of the movement trajectory. Accordingly, a brake for keeping the mover 22, 24 and the stator section 40 of the rotatable stator part 30 together is not necessary. Alternatively, an additional separate brake device may be introduced to keep the car standstill. This may be necessary in alternative embodiments where the magnetic force would not otherwise be adequate, for example, in embodiments wherein the stator poles are implemented with magnets, such as Halbach arrays, and the rotor coils of the mover are air core coils, i.e. the rotor is implemented without ferromagnetic core. After the whole arrangement has turned into the horizontal direction, the stator section 40 is now in line with the horizontal stator beams 28a, 28b and the mover 22, 24 can again be energized as to convey the elevator car 20a-d along the horizontal elevator shaft parts 16, 18.

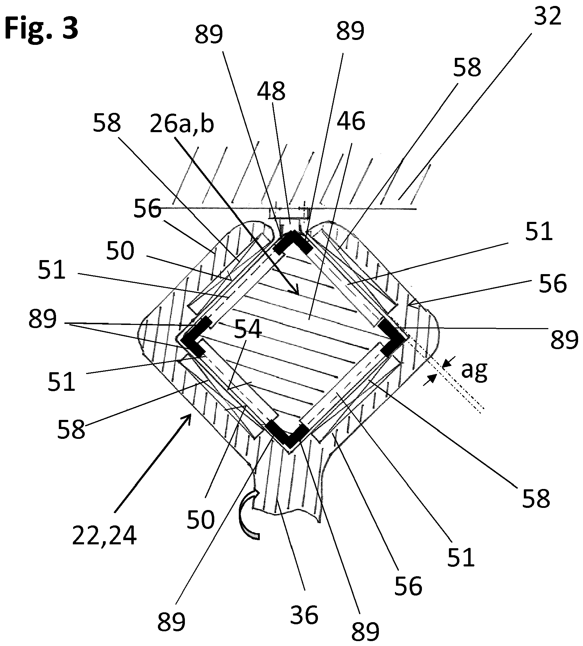

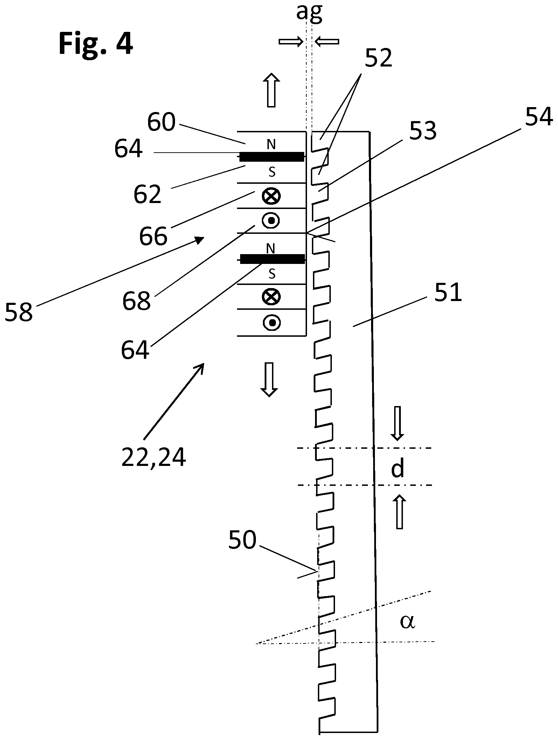

Fig. 3 shows a horizontal cross-section of the vertical stator beam 26a,b and the mover 22, 24. Accordingly, the vertical stator beam 26a,b has a square cross section beam profile 46 having on its fours sides one stator face 50 each, formed by a stator rail 51 with stator teeth 52 embedded in the stator beam 26a,b, 28a,b. The mover 22, 24 comprises successive mover units 58 with electro-magnetic components 60, 62, 64, 66, 68 (see Fig. 4) located in a C-shaped mover housing 56 surrounding the stator beam 26a,b, 28a,b. The mover units 58 with its electro-magnetic components 60, 62, 64, 66, 68 forming the counter faces are opposite and facing the corresponding stator faces 50 of the stator beam 26a,b, 28a,b as to generate an upwards directed propulsion force which is able to drive the elevator car 20a-d against the gravity force in upwards and downwards direction. The mover housing 56 together with the mover units 58 with its electro-magnetic components 60, 62, 64, 66, 68 form the movers 22, 24 of the linear motors of the elevator, as it is apparent from Fig. 4 a linear FSPM motor. The mover housing 56 is via the pivot joint 36 mounted to a support structure 38 of the elevator car 20. The stator beam 26a,b, 28a,b is supported with mountings 48 to the back wall 32 of the elevator shaft 12, 14, 16, 18. The physical properties of the four different stator phases 50 of the vertical stator beam 26a,b and the physical properties of the corresponding active mover parts 54 of the mover 22, 24 are identical.

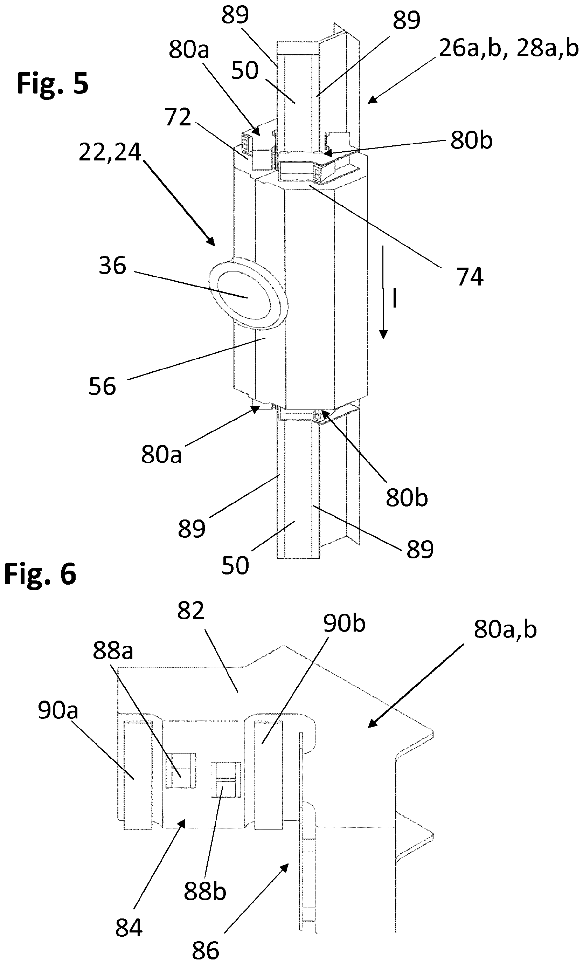

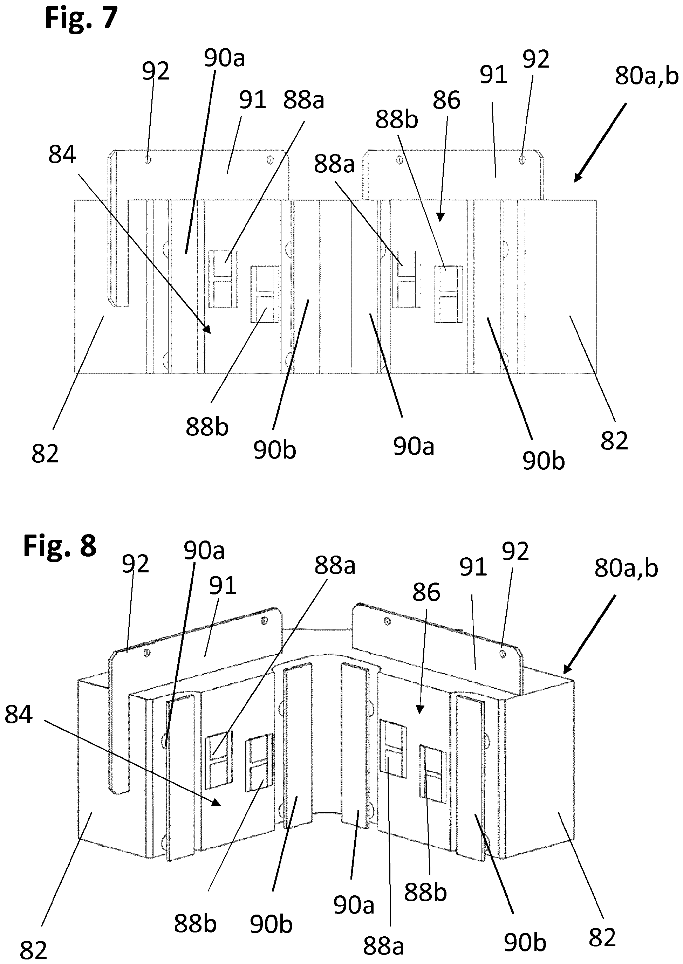

Fig. 4 shows the basic concept of a linear FSPM motor as preferably used in the invention. The stator face 50 is formed by the free ends of stator poles 52, which are worked from a stator rail 51, preferably made of iron, embedded in the stator beam 26a,b, 28a,b. In the corner areas of the stator faces 50 electrically leading stripes 89 made of iron or aluminium are provided to co-act with inductive sensors 90a, 90b as shown in Figs. 6 to 8.

The counter faces 54 each are formed from successive mover units 58, which each comprise two mover irons 60, 62 between which one thin permanent magnet 64 is located, which arrangement of mover irons 60, 62 and permanent magnet 64 is followed by two windings 66, 68 which are controlled as to produce a magnetic field in opposite direction. Each mover unit 58 thus comprises the succession 60, 62, 64, 68 of mover irons, permanent magnets and windings as its electro-magnetic components, which mover units 58 are successively repeated along to the length of the mover 22, 24.These mover units 58 form at their side facing the stator poles 52 the counter face 54 of the mover 22, 24.

Between the counter face 54 of the mover 22, 24 and the stator face 50 of the stator beam 26a,b, 28a,b an air gap ag is formed. Preferably, in this arrangement, the stator teeth 52 of the stator rail 51 are inclined downwards by an angle α as it is shown in Fig. 4. The tooth pitch is d in case of all stator faces 50. The stator teeth 52 are separated by stator gaps 53 which are also identical on all four sides of the vertical stator beam 26a,b. Thus, a very effective linear FSPM motor is formed which allows a good control of the car movement. Via the preferred downwards inclination of the stator teeth 52 by the angle a, the pulling effect of the linear motor in upwards direction is increased so that this vertical stator beam 26a,b is particularly adapted to compensate the gravitational force of the elevator car 20a-d in downwards direction.

Fig. 5 shows a perspective view of a mover 22, 24 comprising two mover blocks 72, 74 mounted side by side in a mover housing 56. Each mover block 72, 74 comprises the in length direction I successive mover units 58, whereby the two counter faces 54 of each mover block 72, 74 are perpendicular to each other, so that the two mover blocks embrace and provide counter faces 54 for the four stator faces 50 of the stator beam 26a,b, 28a,b having a square cross section. At the top and lower end two sensor units 80a, b are mounted to the mover housing 56, which sensor units 80a,b are shown in more detail in Figs. 6 to 8.

According to Fig. 6 to 8 the sensor unit 80a,b comprises a sensor unit housing 82 with two sensor faces 84, 86 aligned with the counter faces 54 of the mover 22, 24 when mounted to the mover housing 56. Each sensor face comprises two magnetic sensors 88a, 88b, which are mutually offset in moving direction I of the mover, preferably at 90 degrees electrical angle. On both sides of the magnetic sensors, 88a, 88b, which are preferably Hall effect sensors, two inductive sensors, e.g. eddy current sensors 90a, 90b are located.

Preferably, the magnetic sensors 88a,b are configured to generate a sinusoidal signals, wherein the peak value of a sinusoidal signal is generated when a magnetic sensor 88a,b is above a stator tooth 52 of a stator rail 51 and the lowest value of the sinusoidal signal is generated when a magnetic sensor 88a,b is above an air gap 53 between adjacent stator teeth 52. A wavelength of the sinusoidal signal corresponds to a distance between two adjacent stator teeth 52 i.e. a stator pole pitch d. Therefore, the values between the lowest and peak value of the sinusoidal signal are generated when a magnetic sensor 88a,b is moved in moving direction of the mover 22, 24 along the stator rail 51 from the position where a magnetic sensor 88a,b is above an air gap 53 between two adjacent stator teeth 52 to the position where a magnetic sensor 88a,b is above a stator tooth 52. When a mover 22, 24 travels along a vertical stator beam 26a,b or a horizontal stator beam 28a,b, a sensor unit 80a,b of the mover 22, 24 moves along a stator rail 51 above stator teeth 52. The sensor unit 80a,b and particularly magnetic sensors 88a,b of that sensor unit 80a,b move in relation to the stator teeth 52 in moving direction of the mover 22, 24 generating signals and in case the velocity of the mover 22, 24 is constant the signals are substantially sine waves.

In a preferred embodiment magnetic sensors 88a,b, preferably Hall effect sensors 88a,b, within one sensor unit 80a,b have 90 electrical degree offset. Then, sinusoidal signals generated by these magnetic sensors 88a,b generate sinusoidal signals having 90 degree offset i.e. 90 degree phase shift. In this embodiment, one signal may represent a sine wave and the other a cosine wave. As the sinusoidal signal corresponds to a position between adjacent stator teeth 52, the location of the sensor unit 80a,b may be defined based on a known value on a sine wave and a known value on a cosine wave of magnetic sensors88a,b in a sensor unit 80a,b. Preferably, the position of a sensor unit 80a,b may be defined based on the measurement values of magnetic sensors 88a,b of the sensor unit 80a,b by using a sine-cosine algorithm.

The eddy current sensors 90a, 90b work together with longitudinal electrically leading stripes 89 (Figs. 3 and 5) e.g. made of iron or aluminium in the corners of the stator beam profiles 46.

The sensor unit housing 82 are mounted to the mover blocks 72, 74 e.g. with mounting plates 91 having mounting holes 92.

With the magnetic sensors 88a, 88b the exact position of the stator poles 52 with respect to the electro-magnetic components of the mover units is determined which enables the drive unit of the linear motor to calculate the torque angle, which enables a smooth start and travel of the mover 22, 24, i.e. of the elevator car 20.

### List of reference numbers:

- 10: elevator - passenger conveyor
- 12: first (vertical) elevator shaft
- 14: second (vertical) elevator shaft
- 16: upper horizontal shaft part
- 18: lower horizontal shaft part
- 20: elevator car
- 22: upper car movers
- 24: lower car movers
- 26a,b: vertical stator beams
- 28a,b: horizontal stator beams
- 30: rotatable stator beam parts between the horizontal and vertical stator beams
- 31: elevator shaft walls
- 32: common back wall of all elevator shafts carrying the stator beams
- 34: landing doors
- 36: pivoted joint between the car and the mover
- 38: (back) wall or support structure of the elevator car for mounting the pivoted joint
- 40: stator section fixed to rotating disc of rotatable stator beam part
- 42: rotating disc
- 44: bearing for the rotating disc on the back wall of the elevator shaft
- 46: stator beam profile with square horizontal cross section having on its four side faces a stator face each
- 48: mountings for the stator beam to the back wall of the elevator shaft
- 50: stator face with stator poles/teeth
- 51: stator rail - stator iron embedded in the stator beam
- 52: stator poles - stator teeth
- 53: air gaps between the stator teeth
- 54: counter face - active mover part of the mover facing the stator face of the stator beam
- 56: mover housing carrying the active mover parts surrounding the stator beam
- 58: successive mover units of the counter faces
- 60-68: electro-magnetic components of the mover units
- 60: first mover iron of a of the mover unit
- 62: second mover iron of a mover unit
- 64: permanent magnet between the mover iron
- 66: first winding of a mover unit
- 68: second winding of a mover unit
- 72: first mover block
- 74: second mover block
- 80a,b: first and second sensor unit
- 82: sensor unit housing
- 84: first sensor face
- 86: second sensor face
- 88a,b: first and second magnetic sensor
- 89: electrically conductive stripes at the stator beam for inductive sensors
- 90a,b: first and second inductive sensors - eddy current sensors
- 91: mounting plate
- 92: mounting hole - screw hole
- r: common rotation axis of rotatable stator part and mover
- I: length direction of the mover in running direction
- d: stator pole pitch
- α: angle of downwards inclination of stator poles
- ag: air gap

## Claims

1. Passenger/goods conveyor (10) comprising at least one transport entity (20a-d) connected with at least one mover (22, 24), which co-acts together with at least one stator beam (26a,b, 28a,b) defining a movement trajectory for the transport entity (20a-d), the at least one mover (22, 24) and the stator beam (26a,b, 28a,b) forming a linear motor, the stator beam (26a,b, 28a,b) carrying on at least two opposite sides stator faces (50) formed by stator poles (52) which again co-act with corresponding mover counter faces (54) formed by mover units (58) facing the stator poles (52), the mover units (58) are arranged successively in running direction of the mover (22, 24), whereby between the two stator faces (50) and the corresponding mover counter faces (54) air gaps (ag) are formed, whereby each mover unit (58) comprises electro-magnetic components (60-68) configured to co-act with the stator poles (52) to provide
- a propulsion force to accelerate and move the mover (22, 24) along the stator beam (26a,b, 28a,b) as well as
- an attraction force between the stator faces (50) and counter faces (54) to adjust both air gaps (ag),
**characterized in that** in connection with at least one of the counter faces (54) of the mover (22, 24) at least one magnetic sensor (88a, 88b) is positioned facing the stator poles (52).

2. Conveyor (10) according to claim 1, **characterized in that** the magnetic sensor (88a, 88b) is a Hall effect sensor.

3. Conveyor (10) according to claim 1 or 2, **characterized in that** two magnetic sensors (88a, 88b) are positioned in connection with at least one of the counter faces (54), preferably in connection with each counter face (54).

4. Conveyor (10) according to claim 3, **characterized in that** the magnetic sensors (88a, 88b) are positioned with an offset in moving direction, which offset is preferably 90 electrical degrees.

5. Conveyor (10) according to one of the preceding claims, **characterized in that** the mover (22, 24) comprises two mover blocks (72, 74), whereby each of the mover blocks (72, 74) comprises the electro-magnetic components (60-68) of the mover units (58) of two adjacent mover counter faces (54).

6. Conveyor (10) according to claim 5, **characterized in that** the mover blocks (72, 74) are facing each other and sandwiching the stator beam (26a,b, 28a,b) in between, and which mover blocks (72, 74) are aligned with the running direction.

7. Conveyor (10) according to one of claims 5 to 6, **characterized in that** the magnetic sensors (88a, 88b) are located at least one end of the mover blocks (72, 74).

8. Conveyor (10) according to one of the preceding claims, **characterized in that** the mover (22, 24) comprises inductive sensors (90a, 90b).

9. Conveyor (10) according to claim 8, **characterized in that** the stator beam (26a,b, 28a,b) comprises an electrically conductive stripe, preferably made of aluminium or copper, extending in running direction and being configured to calculate the length of air gap in connection with the inductive sensor (90a, 90b).

10. Conveyor (10) according to one of the preceding claims, **characterized in that** the conveyor (10) comprises a drive control with a drive model in which a sine-cosine algorithm is used to calculate the position of the mover (22, 24).

11. Conveyor (10) according to one of the preceding claims, **characterized in that** the magnetic sensors (88a, 88b) are located in a sensor unit (80a, 80b) comprising at least two pairs of magnetic sensors (88a, 88b), each pair having an offset in running direction (I) and each pair facing the stator poles (52) of a stator face, whereby preferably each pair is facing the stator poles (52) of a different stator face.

12. Conveyor (10) according to claim 11, **characterized in that** the sensor unit (80a, 80b) has an interface with I/O which is shared by the at least two magnetic sensor pairs (88a, 88b).

13. Conveyor (10) according to claim 11 or 12, **characterized in that** the sensor unit (80a, 80b) comprises a processing unit processing data of the magnetic sensors (88a, 88b) before the data is outputted to the conveyor control system.

14. Conveyor (10) according to one of claims 11 to 13, **characterized in** adjacent magnetic sensor pairs (88a, 88b) are located perpendicular to each other each facing the stator poles (52) of the stator faces (50).

15. Conveyor (10) according to one of the preceding claims, **characterized in that** the mover (22, 24) has at one, preferably at each end in running direction at least one sensor unit (80a, 80b).

16. Method for operating a passenger/goods conveyor (10) comprising at least one transport entity (20a-d) connected with at least one mover (22, 24), which co-acts together with at least one stator beam (26a,b, 28a,b) defining a movement trajectory for the transport entity (20a-d), the at least one mover (22, 24) and the stator beam (26a,b, 28a,b) forming a linear motor, the stator beam (26a,b, 28a,b) carrying on at least two opposite sides stator faces (50) with stator poles (52) which again co-act with corresponding mover counter faces (54) comprising in running direction successive mover units (58) facing the stator poles (52), whereby between the two stator faces (50) and the corresponding mover counter faces (54) air gaps (ag) are formed, whereby each mover unit comprises electro-magnetic components (60-68) configured to co-act with the stator poles (52) to provide
- a propulsion force to accelerate and move the mover (22, 24) along the stator beam (26a,b, 28a,b) as well as
- an attraction force between the faces and counter faces (54) to adjust both air gaps (ag), **characterized in that** the signals of at least one magnetic sensor (88a, 88b) which is mounted in connection with at least one of the counter faces (54) of the mover (22, 24) facing the stator poles (52), which signals are used to calculate the torque angle of the linear motor.

17. Method according to claim 16 used in a passenger/goods conveyor (10), particularly elevator system, according to any of claims 1 to 15.
